# EUROPEAN PATENT APPLICATION

(11) **EP 2 572 587 A1**
(43) Date of publication of application: **27.03.2013**
(21) Application number: 11425239.8
(22) Date of filing: 23.09.2011
(51) Int. Cl.: A23B 7/157, A23B 7/158

(54) **Method for sanitizing through ozonization and for packaging fruit and vegetable products**

(71) Applicant: Ortopiazzolla S.r.l., 20010 Vanzago (MI) (IT)
(72) Inventor: Piazzolla, Michele, 20014 Nerviano, Milano (IT)
(74) Representative: Mozzi, Matteo

(57) **Abstract**

The invention describes a method for sanitizing and packaging at least one fruit and vegetable product in whole-piece configuration.

Such a method firstly comprises the step of providing sanitizing means 10 comprising a tank 101; then, generating ozonized water and pouring the ozonized water into the tank 101 until a fill level is reached that is at least sufficient to allow the at least one fruit and vegetable product to be immersed; then, immersing the at least one fruit and vegetable product in whole-piece configuration in the tank 101, so that it remains at least partially immersed in the ozonized water for an ozonization time period.

Thereafter, the method comprises the step of extracting the fruit and vegetable product from the tank, after the ozonization time period has elapsed, then washing it and drying it; and finally, the step of packaging the fruit and vegetable product in whole-piece configuration.

## Description

### TECHNOLOGICAL BACKGROUND OF THE INVENTION

### Field of application.

The present invention refers to the field of the sanitization and packaging of fruit and vegetable products. In particular, the invention relates to a method and apparatus capable of sanitizing fruit and vegetable products through ozonization, and of packaging such products, once sanitized.

### Description of the prior art.

In the field of the marketing of packaged fruit and vegetable products, the aspects of sanitary quality and conservation is particularly important.

For this reason, fruit and vegetable products usually undergo washing, before packaging, and refrigeration, after packaging, for example during the steps of transportation, delivery and storage in shops.

With respect to such usual procedures, it is strongly perceived the need to further improve the guarantees about food safety for consumers.

For this purpose, several pre-packaging sanitization methods are known, based on the use of various chemical substances, having disinfectant and/or antiseptic and/or antibacterial and/or antiviral and/or deodorant properties.

Moreover, further methods are sometimes used to ensure the equally important requirement of preserving the packaged products, until sale. Also in this case, it is common to use chemical preservative substances, added to the fruit and vegetable products before packaging.

Therefore, in known methods, aimed at increasing the food safety of packaged fruit and vegetable products, such products are generally treated with a suitable combination of one or more chemical sanitizing and/or preservative substances, before packaging.

It should be observed that such known methods also provides the washing of the fruit and vegetable products to be packaged, for example through water, and sometimes by adding chemical additives in water. However, in this context, washing is meant as a step that is necessary but not sufficient to guarantee sanitization, and therefore it is combined with the further steps of adding chemical substances, mentioned above.

This is particularly true for fruit and vegetable products to be packaged in whole-piece configuration, for example one or more entire fruits or one or more entire vegetables.

In the case of so-called "ready-prepared" fruit and vegetable products, consisting of pieces of fruit or vegetables (for example, fruit salad or green salad) there can be special washing methods, both on the original whole product, and in the subsequent pieces. However, also for the treatment of "ready-prepared" products, there are usually further steps of adding chemical additives for sanitization and conservation.

Therefore, in general, it is known to add chemical additives to fruit and vegetable products intended for packaging, in order to carry out sanitizing and preserving treatments.

However, this approach is not without drawbacks.

Indeed, considering the large number of potential harmful agents (inorganic substances, bacteria, viruses), it is always possible that the commonly used additives may not suffice when dealing with new threats.

For example, food-derived infections can emerge due to viruses or bacteria that are not yet sufficiently known, and not suitably counteracted by the additives used. Such situations could potentially cause food-derived epidemics. Also in the case in which infections can be avoided, the occurrence of relative psychosis phenomena would in any case be enough to cause commercial damage to companies in the field.

Moreover, generally speaking, there is a need to have "natural" sanitization and conservation methods, i.e., such as to limit the use of chemical additives on fruit and vegetable products to the greatest possible extent. This is due to the objective judgement that the more natural, and lacking in added chemical substances, food is the healthier it is. This requirement is amplified by the emerging awareness on the subject of food health, now present in the minds of consumers, to such an extent as to affect purchasing choices.

An object of the present invention is to devise and provide an improved method and apparatus for sanitizing and packaging fruit and vegetable products, so as to satisfy the aforementioned requirements, and to at least partially avoid the drawbacks described above with reference to the prior art.

In particular, a method for sanitizing and packaging fruit and vegetable products is proposed, applicable to products to be packaged in whole-piece configuration, such as to limit to the greatest possible extent, and ideally eliminate, the addition of chemical additives to such products, maintaining and even improving the food safety guarantee related to the consumption of such packaged fruit and vegetable products. An apparatus for sanitizing and packaging fruit and vegetable products is also proposed, that is improved with respect to the solutions of the prior art, so as to implement the aforementioned method.

### SUMMARY OF THE INVENTION.

Such an object is accomplished by a method in accordance with claim 1.

Further embodiments of such a method are defined in the dependent claims 2 to 12.

An apparatus configured to carry out the method according to the invention is defined in claim 13.

Further embodiments of such an apparatus are defined in dependent claims 14 to 16.

### BRIEF DESCRIPTION OF THE DRAWINGS.

Further characteristics and advantages of the method and apparatus for sanitizing and packaging fruit and vegetable products according to the invention will become clearer from the following description of preferred example embodiments, given for indicating and not limiting purposes, with reference to the attached figures, in which:
- figure 1 illustrates a simplified view from above of a sanitizing and packaging apparatus according to an example of the invention;
- figure 2 is a side section view of sanitizing means comprised in a sanitizing and packaging apparatus according to an example of the invention.

### DETAILED DESCRIPTION.

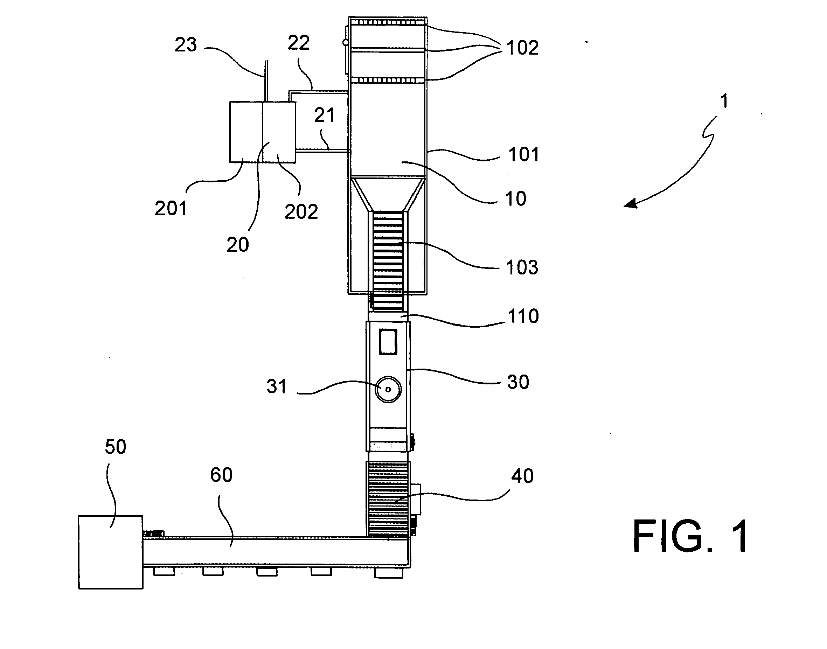

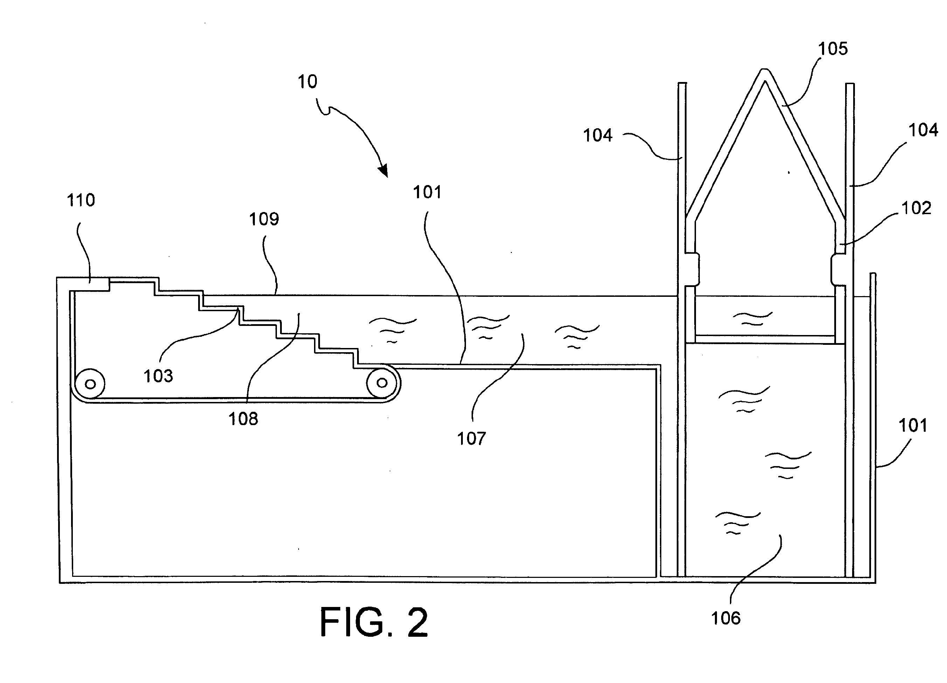

With reference to figures 1 and 2, a sanitizing and packaging apparatus, according to an example of the present invention, will now be described.

The sanitizing and packaging apparatus 1, shown in figure 1, firstly comprises sanitizing means 10, which in turn comprise a tank 101, an immersing module 102 and a first conveyor belt 103.

The tank 101 contains water. In particular, as will be described hereafter, such a tank contains ozonized water. According to an embodiment, the tank 101 can contain for example 3 m³ of water, and its dimensions are, for example, 550 cm x 150 cm x 130 cm.

Advantageously, such a tank 101 can comprise three portions, having different depths, as shown in figure 2, for the reasons that will be illustrated hereafter.

The immersing module 102 is configured to immerse the fruit and vegetable products to be sanitized in the tank 101.

The fruit and vegetable products to be sanitized can be of various kinds, and comprise for example one or more entire fruits of one or more types (for example, and not for limiting purposes: apples, pears, kiwis, apricots, peaches, etc.) and/or one or more entire vegetables (for example, and not for limiting purposes: tomato, potato, carrot, lettuce leaf, etc.), in whole-piece configuration. Each fruit and/or vegetable, in whole-piece configuration, as supplied by the supplier, is intended to be sanitized.

Typically, the fruit and vegetable products to be sanitized are contained in containers, which hereafter will be generically defined as "cases". Typically, each case contains a plurality of products of the same type.

The immersing module 102 is an automatic device, mounted around the tank 101, suitable for moving the cases which contain the fruit and vegetable products. In particular, the immersing module 102 is able to load a case, immerse it in the tank and transferring (i.e., empty out) its content into the water contained in the tank.

In an embodiment of the invention, illustrated in figure 2, for this purpose, the immersing module 102 comprises a support structure 105, onto which the case containing the fruit and vegetable products is loaded, and an immersing mechanism 104 capable of moving the support structure, so as to immerse the case in the tank and to cause it to be emptied.

The immersing mechanism 104 can comprise oil-hydraulic cylinders capable of causing lifting and lowering movements of the support structure 105.

The immersing module 102 also comprises a control system, *per se* known and not shown in the figures, for example a hydraulic control station, suitable for actuating the aforementioned mechanism in response to respective commands.

It should be observed that, advantageously, the immersing module 102 is configured to empty out the cases and immerse the fruit and vegetables in the water in a sufficiently delicate manner as not to cause bruises or damage of any other kind, such as to jeopardise the appearance and/or quality of fruit and vegetables, or to cause rotting.

This can be obtained, typically, by slowly immersing the case to a suitable depth, deeper than the depth of the case. The fruit and/or vegetables contained in it therefore tips into the water of the tank, in most cases by floating.

In different embodiments of the invention, it is provided to manually empty out particularly heavy fruits.

Alternatively, in further embodiments, the immersing module 102 can be arranged to cause a further rotation movement of the case.

It should be noted that the tank 101 is sized so as to contain and allow the simultaneous immersion of the overall content of a case, i.e., typically 250-300 Kg of fruit and vegetable products to be sanitized.

It should also be observed that, in the embodiment shown in figure 2, the tank 101 comprises a first portion 106 having a depth such as to allow the case containing fruit and vegetable products to be completely immersed.

The tank 101 also comprises a second portion 107, shallower than the depth of the first portion 106, in which the fruit/vegetables can remain immersed for a predetermined period.

The sanitizing and packaging apparatus 1, as shown in figures 1 and 2, also comprises a first conveyor belt 103, configured to extract the at least one fruit and vegetable product from the tank, when opportune.

The first conveyor belt 103 is positioned in a third portion 108 of the tank 101, having variable depth.

Typically, the first conveyor belt 103 is a motorized roller unit 103, for example having a width of 60 cm, and comprising several steps in an "escalator-type" configuration. The fruit and vegetable products, after staying in water, in the second portion 107 of the tank 101, gradually move and place themselves on the lowest step of the roller unit 103; then, following the movement of the step, caused by the movement of the roller unit, they are gradually translated and at the same time lifted, while they are in the third portion 108 of the tank. In this way, they finally emerge from the water surface 109, reaching an outlet platform 110 of the sanitizing means 10.

In figure 2, in a side section view, it is shown an inclined profile of the first conveyor belt 103: thus, it is also illustrated the aforementioned variable depth of the third portion 108 of the tank 101.

It should be observed that the operation of the elements described above provides a continuous operating cycle, along the already described steps: from the loading and immersion of the case, to the immersion, staying in water and extraction of the fruit and vegetable products, up to the loading of a subsequent case.

Such an operating cycle must have a controlled time duration, according to requirements that will be discussed hereafter.

The control of how long the cycle lasts is mainly determined by the speed of movement of the first conveyor belt 103, i.e., of the motorized roller unit.

Advantageously, in an embodiment, such a speed is variable in a controlled manner, through speed variators with which the motor of the roller unit is equipped.

Of course, the length of the cycle also determines the respective frequency with which the loading and immersing step of the case is carried out by the immersing module 102.

According to other embodiments, not illustrated, the sanitizing and packaging apparatus 1 can also comprise a water-recycling motor pump, and it can include one or more water filters.

It should be noted that the movement of the fruits and/or vegetables, in the second portion 107 of the tank, towards the lower step of the roller unit 103, is caused firstly due to the pushing by the other fruits and/or vegetables that progressively come out from the case. Such a movement can be further caused by the movement of the water due to the action of the recycling motor pump.

With reference again to figure 1, it should be noted that the sanitizing and packaging apparatus 1 also comprises an ozone-generating module 201, *per* se known, capable of generating ozone O₃ in gaseous form.

More specifically, the ozone-generating module 201 is capable of generating ozone-enriched air from atmospheric air. For this purpose, in the ozone-generating module 201, the air is filtered, dehumidified and conveyed by a compressor in a suitable chamber, comprising two or more electrodes, in which the air is subjected to electrical discharges generated between the electrodes by high-voltage alternating fields. In this way, it is possible to cause the dissociation of the molecular oxygen O₂ of such air and the consequent formation of ozone O₃.

The sanitizing and packaging apparatus 1 also comprises a mixing module 202, *per* se known, configured to receive water from a filling-up duct 23 or from a second duct 22, and suitable for adding the ozone O₃ to the water, i.e. for mixing ozone and water, i.e. for producing ozonized water.

It should be observed that by the term "ozonized water" it is meant water having a notable ozone concentration. As will be illustrated hereafter, such a concentration can be, purely as an example, 0.9 ppm at the outlet of the mixing module and 0.3 ppm in the ozonized water in the tank 101. The addition of ozone in the water, i.e., the mixing of ozone and water, allows a water ozonization action, since ozone is soluble in water.

According to an example embodiment, the mixing module 202 contains contact circuits, for example made up of PVC pipes and Venturi tubes, which exploit the known "Venturi effect". The mixing module 202 can also comprise suitable spaces in which water and ozone, in the mixing step, are kept under a suitable pressure and are subjected to turbulence, for example through a turbine, to make the mixing more efficient.

The ozonized water thus generated is injected into the tank 101 through a first duct 21. The water can be simply poured into the tank by the action of gravity, through a suitable positioning and inclination of the first duct 21; or, preferably, it is pumped through the first duct 21, through a pump, not illustrated in the figures.

Taking into account the close correlation of the operations necessary for ozonization, the ozone-generating module 201 and the mixing module 202 are preferably integrated in an ozonized water generation assembly 20. Nevertheless, other types of implementation, which for example provides that the mixing module 202 is integrated in the tank 101, are also comprised in the invention.

At the time of a first filling of the tank 101, the filling-up duct 23 is connected to a water source. The water is ozonized, as described above, by the ozonized water generation assembly 20, and injected into the tank 101 through the first duct 21, until it has reached a sufficient filling level, in other words until the tank contains a level of ozonized water at least sufficient to allow the immersion of each of the fruit and vegetable products to be sanitized.

In a preferred embodiment, the suitable filling level is established so as to satisfy the following requirements, relative to the depth of the ozonized water: allowing the cases to be totally immersed at the first portion 106 of the tank; allowing the fruits/vegetables to be partially immersed and/or to float in the second portion 107 of the tank; allowing the first conveyor belt 103 to emerge before reaching the outlet platform 110.

Once the sufficient filling level has been reached, which can vary, according to the type of fruit and vegetable product to be sanitized, it is suitable to keep a stable state: for this purpose, recycling of the water is advantageously carried out, between the tank 101 and the ozonized water generation assembly 20: a certain amount per unit time of ozonized water enters into the tank 101, coming from the ozonized water generation assembly 20, through the first duct 21; a similar (nominally equal) amount of ozonized water comes out from the tank 101, to be injected into the ozonized water generation assembly 20, through the second duct 22.

In such conditions, in normal operating conditions, a water circuit is thus created, in which the water treated by the ozonized water generation assembly 20 comes from the tank 101, and the filling-up duct 23 is kept closed, apart from particular moments in which a filling-up is needed.

The recycling described above has the important function of keeping the level of ozonization of the water in the tank constant. Indeed, ozone is an unstable gas with a half-life in solution of the order of a few minutes. Therefore, the ozone concentration in the water naturally tends to decrease, in the absence of external intervention, depending on different variables including pressure conditions and depth of the water. Given the characteristics of the tank and of the water circuit, it is possible to estimate the equilibrium value of the ozone concentration in the water of the tank, as a function of the ozone concentration in the water at the outlet of the ozonized water generation assembly 20.

The system is designed, overall, to guarantee that the ozone concentration in the ozonized water is sufficient to ensure the beneficial effects that will be illustrated hereafter.

Such a concentration is preferably between 0.2 and 0.4 ppm, and more preferably equal to 0.3 ppm.

For this purpose, the ozone concentration at the outlet of the generating group 20 is typically higher, and dependent on the design characteristics of the water circuit: such a concentration can for example be 0.9 ppm of dissolved ozone. In order to obtain this, the ozone concentration in the mixing module 202 must be typically above 3 mg/litre, at a pressure of over 3 bars.

Other typical characteristics of the ozone-generating group 20, given as a non-limiting example, are: ozone production of 10 g/hour and a water circuit flow rate of 12 m³/hour.

The first duct 21 and the second duct 22 are connected to the tank, typically through respective openings in the rear or side part of the tank itself.

According to an embodiment, the ozone-generating module 201 makes it possible to generate an adjustable amount of ozone per unit time according to requirements.

The Applicant highlights that, for the purposes of the present invention, the fact that water with high ozone content, i.e. ozonized water, is *per se* a very effective sanitizing agent, is relevant.

Indeed, ozone is condensed oxygen O₃, an unstable gas that easily degrades and decays. Thanks to its high oxidizing power, it can be used to destroy algae and bacteria, to inactivate viruses and to oxidize organic and inorganic contaminants.

In particular, with reference to inorganic components, it is known to use ozone for the deferrization and demagnetization of water, through reactions that convert iron and manganese salts in the state of hydrates, which precipitate and are eliminated by decantation or filtering.

With reference to organic substances, ozone has remarkable disinfectant and antiseptic properties; it is able to destroy pathogenic microorganisms and germs present in water, and it carries out a remarkable anti-viral action, even stronger than chlorine. The germicide activity of ozone is based on its high direct oxidizing capability: thanks to this property, all of the macromolecular structures of cells, microbial and not (moulds, acetic and heterolactic bacteria, apiculate yeasts, etc.) are profoundly altered and inactivated. Microbe species cannot withstand it, even if they produce spores or cysts.

In its sterilizing action, ozone acts directly on bacteria, causing a catalytic oxidation process on the mass of bacterial proteins, ensuring a faster action compared, for example, to chlorine, which acts on the basis of mechanisms that involve the cytoplasm.

The disinfecting action of ozone is not limited to bacteria and viruses. Thanks to its strong oxidizing effect, complex molecules can also be broken, and highly poisonous aromatic compounds can for example be broken down, being destroyed and thus removed.

Thanks to this, ozone is also a deodorizing agent, i.e., capable of destroying most compounds, present in water, which generate bad smells, in particular phenol compounds.

Moreover, ozone preferably oxidizes the organic substances in water, but does not cause the coagulation of the colloidal particles contained in water like other reactants do, such as aluminium sulphate or iron chloride.

As a consequence of the above, the use of ozone is known in the purification treatment of water, and for the sterilization of treated or natural water. Its insertion in the water purification process is today common, due to the advantages involved in using it.

It is also known to use ozonized water for washing pipes of hydraulic plants, preventing the formation and development of populations of bacteria and algae, allowing all of the sections of the pipes to be kept in conditions of maximum cleanliness, ensuring an effective disinfection and guaranteeing the absence of odours or residual substances.

For the various treatments quoted above, the doses of ozone to be added into water typically vary between 0.1 and 0.5 ppm, preferably between 0.2 and 0.4 ppm.

Forming the basis of the present invention is the significant insight, corroborated by experience, that the above described properties of ozone act not only with reference to water, as known, but they can also effectively act on fruit and vegetable products, immersed and kept in ozonized water, with sufficient ozone concentration, for a sufficient time period, which will be defined hereafter as "ozonization time period" or "ozonization period".

Specifically, the Applicant has found effective results for concentrations from 0.2 ppm to 0.5 ppm of ozone in water, and more specifically for concentrations of 0.3 ppm in water; and for ozonization time periods of between 4 and 10 minutes, and more specifically between 4 and 8 minutes. For example, with an ozone content of 0.3 ppm and an ozonization period of 4 minutes, it is possible to achieve an inactivation percentage of the present viruses of up to 99.99 %.

As already described earlier, the apparatus according to the invention is able to ensure that the fruit and vegetable products to be sanitized remain immersed in water, ozonized at the suitable level, for a time period of suitable length.

Therefore, it can be stated that, thanks to the apparatus of the present invention, as described above, a sanitization treatment of fruit and vegetable products is obtained, with antiseptic, antibacterial, anti-viral and deodorizing effects. As a consequence of the antibacterial and anti-viral action, the conservation properties of the sanitized products are also improved.

Moreover, the use of ozone, unlike other substances, ensures the total absence of harmful residual products. Indeed, ozone, even if dosed in excess, after a few minutes of contact transforms totally into oxygen, without any danger and without harmful effects.

Now, with reference again to figures 1 and 2, it is noted that the sanitizing and packaging apparatus 1 comprises washing and drying means 30, configured to wash and dry the fruit and vegetable products, after they have been extracted from the sanitizing means 10.

The washing and drying means 30 firstly comprise a platform for the fruit and vegetable products to be washed and dried; moreover, they can comprise one or more nozzles, configured to spray water on the fruit and vegetable products; one or more brushes, configured to scrub the fruit and vegetable products; and finally, drying means, suitable for drying the fruit and vegetable products.

In an embodiment, the drying means comprise one or more brushes or drying sponges.

According to an embodiment, the drying means comprise one or more electroventilators 31.

In general, the washing and drying means 30 can be made through *per se* known automatic washing and drying systems, equipped with suitable motors for the movement of the mentioned brushes.

According to possible embodiments, the nozzles for washing can be seven to twenty in number, arranged in one or more rows. The washing brushes can be rotary brushes, numbering between ten and twenty. The drying brushes can be rotary brushes of sponge material, for example rubber latex sponges, numbering from ten to twenty. The one or more electroventilators can for example be 0.75 CV helical electroventilators.

According to an embodiment, the washing and drying means 30 further comprise a cover, for example shaped like a tunnel, so as to surround the area in which the washing and drying operations take place.

In accordance with an embodiment, the fruit and vegetable products to be washed and dried are introduced into the washing and drying means 30, from the platform 110 of the sanitizing means 10, by the pushing action of the fruits/vegetables that progressively are caused to advance by the first conveyor belt 103.

In different embodiments, the washing and drying means can operate on variable amounts of fruit and vegetable products, for example between 600 and 4000 Kg/hour.

The duration of the washing and drying processes can vary according to the type of fruit or vegetable.

With regard to the drying means, it should be observed that they are not present in some embodiments, where simple draining of the water is sufficient.

It should be observed that, in the present invention, the immersion in the sanitizing tank 102 can already be considered as a washing of the fruit and vegetable products. However, as already observed, such immersion has the main purpose of sanitizing.

The washing carried out by the aforementioned washing and drying means has the specific further purpose of removing any remaining element of impurity or dirt (therefore, not incidentally, such washing also provides a mechanical scrubbing action) and it can also be interpreted as a rinsing.

Moreover, as already observed, the present invention applies particularly to the sanitization and subsequent packaging of fruit and vegetable products in whole-piece configuration. Therefore, the invention provides a continuous cycle without solution of continuity, from sanitization to packaging, and it does not provides further treatments (for example chopping) of the fruit and vegetable products. Therefore, the quoted washing and drying steps take place, as required, before packaging.

Advantageously, in an example embodiment, the water sprayed by some or all of the nozzles is ozonized water.

According to an embodiment, the washed and dried fruit and vegetable products are extracted from the washing and drying means 30 through a second conveyor belt 40, with which the apparatus 1 is equipped.

Again with reference to figure 1, the sanitizing and packaging apparatus 1 also comprises packaging means 50, suitable for packaging the sanitized, washed and dried fruit and vegetable products in whole-piece configuration.

The packaging in whole-piece configuration provides that an integer number of fruits and/or vegetables is included in a single package. Typically, a single fruit or a single vegetable is packaged. Another typical possibility is to package two fruits of the same type (or two vegetables of the same type) in a package.

The packaging means 50 are *per se* known, and they can for example comprise, in alternative embodiments, a heat-welding machine, or a thin film machine, or a so-called "flow-packer".

Typically, the packaging means 50 act automatically, by sealing a container in which the fruit or vegetable to be packaged is contained, or on which it is placed.

Concerning this aspect, in an embodiment, the apparatus 1 also comprises a third conveyor belt 60.

The third conveyor belt 60 is configured to receive the fruit and vegetable products from the second conveyor belt 40. The fruit and vegetable products, while they flow on the third conveyor belt 60, are examined during a sorting step, aimed at eliminating products that do not reach a sufficient quality standard (for example, presenting bruises, deformities, rotten parts, etc.).

The selected products are then deposited or positioned, for example one by one or else two by two, in respective containers, for example trays, tubs or baskets.

The containers are then in turn positioned on the third conveyor belt 60, in order to be transported, one by one, towards the packaging means 50, for the final packaging, as described above.

It should be observed that the aforementioned sorting and positioning steps are typically carried out manually by one or more workers. However, in other embodiments of the invention, it is provided that such steps are carried out automatically by sorting and positioning devices, *per se* known, which can be comprised in the apparatus 1.

According to yet another embodiment, the sanitizing and packaging apparatus 1 of the present invention further comprises environment sanitizing means, configured to spray and/or inject ozone into the areas surrounding said sanitizing means, washing and drying means, second conveyor belt, third conveyor belt and packaging means. In this way, it is advantageously possible to improve the guarantee of sanitization of the packaged product, further lowering the already limited risks of contamination faced by fruit and vegetable products from the moment of leaving the sanitizing means to the moment of packaging.

The packaging itself can be carried out in an ozonized atmosphere.

Hereafter, the method for sanitizing and packaging at least one fruit and vegetable product, according to the invention, will be described. In particular, various example embodiments, in accordance with the embodiments already described with reference to the apparatus according to the invention, will be summarized.

In accordance with one embodiment, the method firstly comprises the step of providing sanitizing means 10 comprising a tank 101; then, of generating ozonized water and of pouring the ozonized water into the tank 101 until a filling level is reached that is at least sufficient to allow the at least one fruit and vegetable product to be immersed; then, of immersing the at least one fruit and vegetable product in whole-piece configuration in the tank 101, so that it remains at least partially immersed in the ozonized water for an ozonization time period. Thereafter, the method provides the steps of extracting the fruit and vegetable product from the tank, after the ozonization time period has elapsed, then washing it and drying it; and finally, packaging the fruit and vegetable product in whole-piece configuration.

According to a further embodiment, the step of generating ozonized water comprises generating ozone, through an ozone-generating module 201; and then mixing the generated ozone with water, through a mixing module 202, so as to generate ozonized water. Moreover, the step of pouring ozonized water into the tank 101 comprises connecting the mixing module 202 to the tank 101 through a first duct 21, and pumping the ozonized water from the mixing module 202 to the tank 101 through the first duct 21.

According to an embodiment, the method comprises the further steps of providing a second duct 22 for connecting the tank 101 and the ozonized water generation assembly 20; and of carrying out water recycling between the tank 101 and the ozonized water generation assembly 20, wherein the ozonized water is injected into the tank 101, from the ozonized water generation assembly 20, through the first duct 21, and is ejected from the tank 101, towards the ozonized water generation assembly 20, through the second duct 22.

In accordance with an embodiment, a plurality of fruit and vegetable products are contained in a case, and therefore the sanitizing means 10 further comprise an immersing module 102, suitable for moving the case. In such an embodiment, the immersing step comprises the phases of immersing the case in the ozonized water contained in the tank, and of transferring (i.e., emptying out) the plurality of fruit and vegetable products contained in the case into the ozonized water.

According to a particular example embodiment, the ozonization period is between 4 and 10 minutes.

According to a more specific example embodiment, the ozonization period is between 6 and 8 minutes.

In accordance with another embodiment, the sanitizing means 10 further comprise a first conveyor belt 103, and the extracting step comprises placing the fruit and vegetable product on the first conveyor belt, and carrying the fruit and vegetable product out from the tank, through a movement of the first conveyor belt 103.

According to a further embodiment of the method, the washing and drying step comprises the phases of providing washing and drying means 30, and of introducing the fruit and vegetable product, downstream of the sanitizing means 10, into the washing and drying means 30.

In accordance with an embodiment of the method, the washing and drying step further comprises the phases of spraying water on the fruit and vegetable product through one or more nozzles comprised in the washing and drying means 30; and then of scrubbing the fruit and vegetable product through one or more brushes comprised in the washing and drying means 30.

According to an example embodiment, the water sprayed is ozonized water.

According to an embodiment, the washing and drying step further comprises drying the fruit and vegetable product through brushing or electroventilation.

In accordance with an embodiment of the invention, the packaging step comprises the phases of extracting the fruit and vegetable product from the washing and drying means 30; then, placing the fruit and vegetable product in a container; then, sealing the container so as to obtain a package for the fruit and vegetable product in whole-piece configuration.

According to another embodiment, the method according to the invention comprises the further steps of checking the fruit and vegetable product, before packaging, with respect to one or more quality criteria, and proceeding to the packaging step only if the check has had a positive outcome.

According to another example embodiment of the method, the step of extracting from the washing and drying means 30 is carried out through a second conveyor belt 40; the checking step is carried out manually on the fruit and vegetable product while it is transported on the second conveyor belt 40; the positioning step is carried out manually; and the sealing step comprises conveying the container, through a third conveyor belt 60, to packaging means 50.

According to a further embodiment, the method of the invention comprises the further step of sanitizing, through spraying of ozone, an area surrounding the sanitizing means 10, the washing and drying means 30 and the packaging means 50.

As can be seen, the purpose of the present invention is accomplished by the sanitizing and packaging method and apparatus, described above, by virtue of their characteristics.

Indeed, they make it possible to obtain an effective sanitizing treatment of fruit and vegetable products, with antiseptic, antibacterial, anti-viral and deodorizing effects, by means of the use of ozone and without the need to use further chemical additives. Moreover, as a consequence of the antibacterial and anti-viral action, the conservation properties of the sanitized products are improved.

It should also be observed that, by providing packaging of the fruit and vegetable products in whole-piece configuration, through a cycle that uninterruptedly goes from sanitization to packaging, it is possible to avoid to perform further operations on the fruit and vegetable products, that could jeopardise the sanitization obtained (like for example the chopping provided for "ready-prepared" products).

Overall, fruit and vegetable products are obtained that are packaged in whole-piece configuration, and sanitized in a satisfactory manner, having eliminated, or in any case substantially reduced, the need for chemical additives. The ozone used in the present invention is not indeed a chemical additive, in the strict sense of the term, and in any case it does not provoke harmful effects, as already previously observed, thus fully respecting the natural character of the sanitized fruit and vegetable product.

A man skilled in the art can bring modifications, adaptations and replacements of elements with other functionally equivalent ones even together with the prior art, even creating hybrid implementations, to the embodiments of the sanitizing and packaging method and apparatus described above, in order to satisfy contingent requirements, without departing from the scope of the following claims. Each of the characteristics described as belonging to a possible embodiment can be made independently from the other embodiments described. It should also be noted that the term "comprising" does not exclude other elements or steps, the term "a" or "one" does not exclude a plurality. Moreover, the figures are not necessarily to scale, since importance is attributed to the illustration of the principles of the invention.

## Claims

1. Method for sanitizing and packaging at least one fruit and vegetable product in whole-piece configuration, comprising the steps of:
- providing sanitizing means (10) comprising a tank (101);
- generating ozonized water;
- pouring the generated ozonized water into the tank (101) until a filling level is reached that is at least sufficient to allow the at least one fruit and vegetable product to be immersed;
- immerging the at least one fruit and vegetable product in whole-piece configuration in the tank (101), so that the at least one fruit and vegetable product remains at least partially immersed in said ozonized water for an ozonization time period;
- extracting the at least one fruit and vegetable product from the tank (101), after said ozonization time period has elapsed;
- washing and drying the at least one fruit and vegetable product;
- packaging the at least one fruit and vegetable product in whole-piece configuration.

2. Method according to claim 1, wherein the step of generating ozonized water comprises:
- generating ozone, through an ozone-generating module (201);
- mixing the generated ozone with water, through a mixing module (202), so as to generate ozonized water; and wherein the pouring step comprises:
- connecting the mixing module (202) to the tank (101) through a first duct (21);
- pumping the ozonized water from the mixing module (202) to the tank (101) through the first duct (21).

3. Method according to claim 2, wherein the ozone-generating module (201) and the mixing module (202) are integrated in an ozonized water generation assembly (20), connected to the tank (101) through the first duct (21).

4. Method according to claim 3, comprising the further steps of:
- providing a second duct (22) for connecting the tank (101) and the ozonized water generation assembly (20);
- carrying out water recycling between the tank (101) and the ozonized water generation assembly (20), wherein the ozonized water is injected into the tank (101), from the ozonized water generation assembly (20), through the first duct (21), and is ejected from the tank (101), towards the ozonized water generation assembly (20), through the second duct (22).

5. Method according to claim 1, wherein a plurality of fruit and vegetable products are contained in a case, and the sanitizing means further comprise an immersing module (102), suitable for moving the case;
and, further, the immersing step comprises:
- immersing the case in the ozonized water contained in the tank (101), by means of the immersing module (102);
- transferring the plurality of fruit and vegetable products, contained in the case, into the ozonized water.

6. Method according to claim 1, wherein the ozonization time period is between 4 and 10 minutes.

7. Method according to claim 1, wherein the ozonized water contains an ozone concentration in the range between 0.2 ppm and 0.4 ppm.

8. Method according to claim 1, wherein the sanitizing means further comprise a first conveyor belt (103), and wherein the extracting step comprises:
- placing the at least one fruit and vegetable product on the first conveyor belt (103);
- carrying the at least one fruit and vegetable product out from the tank, through a movement of the first conveyor belt (103).

9. Method according to claim 1, wherein the washing and drying step comprises:
- providing washing and drying means (30), and
- introducing the at least one fruit and vegetable product, downstream of the sanitizing means (10), into the washing and drying means (30).

10. Method according to claim 9, wherein the washing and drying step further comprises:
- spraying water on the at least one fruit and vegetable product through one or more nozzles comprised in the washing and drying means (30);
- scrubbing the at least one fruit and vegetable product through one or more brushes comprised in the washing and drying means (30);
- drying the at least one fruit and vegetable product through brushing or electroventilation.

11. Method according to claim 1, wherein the packaging step comprises:
- extracting the at least one fruit and vegetable product from the washing and drying means (30);
- placing the at least one fruit and vegetable product in a container;
- sealing the container, so as to obtain a package for the at least one fruit and vegetable product in whole-piece configuration.

12. Method according to claim 1, comprising the further step of sanitizing an area surrounding said sanitizing means (10), washing and drying means (30) and packaging means (50) through spraying of ozone.

13. Apparatus for sanitizing and packaging (1) at least one fruit and vegetable product in whole-piece configuration, comprising:
- an ozonized water generation assembly (20), configured to generate ozonized water;
- sanitizing means (10) comprising:
- a tank (101) containing water, connected to the ozonized water generation assembly (20) to receive the generated ozonized water;
- an immersing module (102), suitable for immersing the at least one fruit and vegetable product in whole-piece configuration in the tank (101), so that the at least one fruit and vegetable product remains immersed in said ozonized water for an ozonization time period;
- a first conveyor belt (103), configured to extract the at least one fruit and vegetable product from the tank (101), after said ozonization time period has elapsed;
- washing and drying means (30), configured to wash and dry the at least one fruit and vegetable product;
- packaging means (50), suitable for packaging the at least one fruit and vegetable product in whole-piece configuration.

14. Apparatus according to claim 13, wherein the ozonized water generation group (20) comprises an ozone-generating module (201), configured to generate ozone, and a mixing module (202), configured to mix water with the generated ozone, so as to obtain ozonized water.

15. Apparatus according to claim 13, wherein the washing and drying means (30) comprise:
- one or more nozzles configured to spray water on the at least one fruit and vegetable product;
- one or more brushes configured to scrub the at least one fruit and vegetable product;
- drying means, suitable for drying the at least one fruit and vegetable product.

16. Apparatus according to claim 13, further comprising:
- a second conveyor belt (40), suitable for extracting the at least one fruit and vegetable product from the washing and drying means (30);
- a third conveyor belt (60), suitable for transporting a container of the at least one fruit and vegetable product to the packaging means (50).
